## Europäisches Patentamt

## European Patent Office

## Office européen des brevets

(19)

(11) Veröffentlichungsnummer : **0 011 050**
**B1**

(12)

# EUROPÄISCHE PATENTSCHRIFT

(45) Veröffentlichungstag der Patentschrift :
07.04.82

(21) Anmeldenummer : 79810136.6

(22) Anmeldetag : 22.10.79

(51) Int. Cl.³ : **H 04 L  9/02**

(54) **Chiffrier-Dechiffriergerät.**

(30) Priorität : 27.10.78 CH 11121/78

(43) Veröffentlichungstag der Anmeldung :
14.05.80 (Patentblatt 80/10)

(45) Bekanntmachung des Hinweises auf die Patenterteilung : 07.04.82 Patentblatt 82/14

(84) Benannte Vertragsstaaten :
AT CH DE FR GB SE

(56) Entgegenhaltungen :
FR - A - 2 220 938

(73) Patentinhaber : GRETAG Aktiengesellschaft
Althardstrasse 70
CH-8105 Regensdorf (CH)

(72) Erfinder : Widmer, Walter Rudolf
Langackerweg 12
CH-8155 Niederhasli (CH)

(74) Vertreter : Pirner, Wilhelm et al
Patentabteilung der CIBA-GEIGY AG Postfach
CH-4002 Basel (CH)

Imprimerie Jouve, 18, rue St-Denis, 75001 Paris, France

EP 0 011 050 B1

Chiffrier-Dechiffriergerät

Die Erfindung betrifft ein Chiffrier-Dechiffriergerät gemäss dem Oberbegriff des Patentanspruchs 1.

Bei den bisher bekannten Geräten dieser Art, z.B. den Chiffriergeräten TC-803, GC 905 und GC 805 der Anmelderin, die unter anderem in den CH-PS N° 392 617, 402 937, 408 109, 411 983, 530 742 und 600 462 beschrieben sind, wird der Zufallsschlüssel entweder in einer separaten Operation Zeichen für Zeichen von Hand über die Tastatur eingegeben oder geschieht dies automatisch, wobei aber dann ein grösserer Schaltungsaufwand vonnöten ist. Letzterer ist insbesondere bei den neuerdings immer aktuelleren Chiffriergeräten im Taschenrechnerformat unerwünscht. Durch die Erfindung soll mit möglichst geringem Schaltungsaufwand eine automatische Erzeugung und Eingabe der Zufallsschlüsselzeichen in die Verarbeitungsstufe erreicht werden. Gemäss der Erfindung erfolgt dies dadurch, dass Mittel vorgesehen sind, die aufgrund jeder Betätigung irgend einer Taste von wenigstens einem Teil von solchen Eingabetasten, die bei jeder Benützung des Gerätes von dem eigentlichen Chiffriervorgang während der Funktionsvorbereitung des Gerätes und/oder der Texteingabe benützt werden, ein vom Zufallsgenerator erzeugtes Schlüsselzeichen in den Schlüsselzeichenspeicher einschreiben, und dass die Funktionsablaufsteuerung so ausgebildet ist, dass sie bei Bedarf die für die Festlegung des Anfangszustandes des Chiffriergenerators notwendige Anzahl der vom Zufallsgenerator erzeugten Schlüsselzeichen aus dem Schlüsselzeichenspeicher ausliest.

Die Erfindung macht sich den Umstand zunutze, dass praktisch bei jeder Benutzung des Geräts vor dem eigentlichen Chiffrier- bzw. Dechiffriervorgang erfahrungsgemäss immer einige Tasten der Eingabetastatur betätigt werden müssen. Insbesondere gilt dies für die moderneren Geräte, die mit einem Textspeicher ausgestattet sind, und in die meist der komplette zu verarbeitende Text oder zumindest grosse Teile davon eingegeben werden, um dann als Ganzes verarbeitet zu werden. Diese diversen Eingabeoperationen werden gemäss der Erfindung zur Erzeugung bzw. Abspeicherung der einzelnen Zeichen des Zufallschlüssels ausgenützt, sodass dafür keine separaten Tastenbetätigungen notwendig sind.

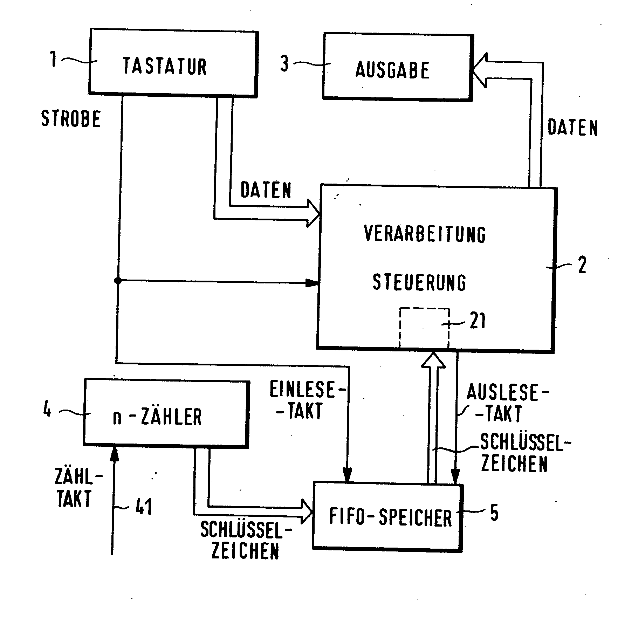

Im folgenden wird die Erfindung anhand eines in der Zeichnung dargestellten Ausführungsbeispiels näher erläutert. Die einzige Zeichnungsfigur zeigt ein Blockschema eines erfindungsgemässen Chiffrier-Dechiffriergeräts.

Das dargestellte Gerät umfasst eine Tastatur 1, eine Verarbeitungs- und Steuerstufe 2, eine Ausgabeeinrichtung 3, z.B. in Form einer alphanumerischen optischen Anzeige, einen Zufallsgenerator in Form eines Modulo-n-Zählers 4 und einen sogenannten FIFO-Speicher 5, der so organisiert ist, dass Einschreibung und Auslesung von Daten unabhängig voneinander erfolgen können, die Reihenfolge der eingeschriebenen und der ausgelesenen Daten aber übereinstimmt. Die Funktionseinheiten 1-5 sind untereinander durch nicht bezeichnete Daten- und Steuerleitungen verbunden.

Mit Ausnahme des Speichers 5 und des Zählers 4 stimmt das dargestellte Gerät im wesentlichen mit bekannten Geräten dieser Art, beispielsweise etwa den schon genannten Geräten TC-803, GC-805 und GC-905 der Anmelderin oder den in den CH-PS N° 592 937 und 594 261 beschriebenen Geräten, überein. Die Verarbeitungs- und Steuerstufe 2 ist dabei meist durch ein Mikrocomputersystem realisiert. Sie enthält unter anderem auch einen Chiffriergenerator 21, der mittels einer Anzahl von Schlüsselzeichen auf einen bestimmten Anfangszustand gesetzt werden kann und dann autonom eine praktisch zufällige Chiffrierimpulssequenz erzeugt, mittels der die Daten chiffriert bzw. dechiffriert werden. Der Chiffriergenerator könnte natürlich auch softwaremässig realisiert sein.

Der Modulo-n-Zähler 4, der den Zufallsgenerator bildet, wird von einem über die Leitung 41 zugeführten Zähltakt von z.B. 100 kHz kontinuierlich getaktet. Bei jeder Betätigung einer Taste der Eingabetastatur 1 erzeugt diese einen Austast-Impuls, der dem FIFO-Speicher 5 als Schreib-Impuls zugeführt wird, und bewirkt, dass der momentane Zählerstand des Zählers 4 in den Speicher 5 eingelesen wird. Die Gesamtheit der Zählerstände bildet die möglichen Schlüsselzeichen. Durch geeignete Wahl der Zykluslänge n des Zählers kann die Mannigfaltigkeit der Schlüsselzeichen gesteuert werden. Insbesondere, wenn als Schlüsselzeichen nur Buchstaben erlaubt sein sollen, kann n auf z.B. 26 beschränkt werden.

Mit jeder Tastenbetätigung wird also ein Schlüsselzeichen erzeugt und in den Speicher eingelesen. Der Speicher kann beispielsweise zehn Plätze umfassen. Falls vor dem Abruf der Schlüsselzeichen die Tastatur öfter als zehn mal betätigt wurde, befinden sich jeweils die zehn zuletzt eingelesenen Zeichen im Speicher.

Wenn der zu chiffrierende bzw. zu dechiffrierende Text in den nicht dargestellten Textspeicher eingelesen worden ist, beginnt dessen Verarbeitung. Dazu erzeugt die Verarbeitungs- und Steuerstufe 2 zunächst einen Auslesetakt, den sie dem FIFO-Speicher 5 zuführt, liest die in diesem eingelesenen Schlüsselzeichen aus und transferiert sie in den Chiffrier-generator 21, um so dessen Anfangszustand zu determinieren. Anschliessend erfolgt die Verarbeitung des eingegebenen Texts in bekannter Weise wie z.B. in den schon genannten Patentschriften beschrieben.

Damit die vom Zähler 4 erzeugten Schlüsselzeichen auch tatsächlich Zufallscharakter haben, ist es notwendig, dass er ausreichend schnell umläuft. Als unterste Grenze für den Zähltakt kann noch zugelassen werden, dass der Zähler mindestens einen vollständigen Zählzyklus durchläuft in der kürzestmöglichen Zeitspanne zwischen zwei aufeinanderfolgenden Tastaturbetätigungen. Diese Zeitspanne ist in der Regel durch den Aufbau der Tastatur selbst gegeben und liegt beispielsweise bei 50 Millisekunden. In der Praxis wird der Zähltakt wesentlich höher gewählt und zwar so, dass der Zähler zwischen zwei Tastaturbetätigungen, die im Normalfall erfahrungsgemäss im Abstand von etwa 300 Millisekunden erfolgen, mindestens etwa 10 bis 100 mal umläuft. Praktische Taktfrequenzen sind etwa ab 1 kHz, vorzugsweise über 50 kHz und insbesondere grössenordnungsmässig etwa 100 kHz.

Es versteht sich, dass anstelle des Modulo-n-Zählers 4 auch irgendein anderer zyklischer Codegenerator eingesetzt werden könnte. Dasselbe gilt auch für den FIFO-Speicher 5. Diese beiden Elemente haben sich jedoch als besonders zweckmässig erwiesen.

**Ansprüche**

1. Chiffrier-Dechiffriergerät mit einer Eingabetastatur (1), einer Chiffrier-Dechiffrierstufe (2), einem Schlüsselzeichenspeicher (5), einem Zufallsgenerator (4), einer Ausgabeeinrichtung (3) und einer Funktionsablaufsteuerung (2), wobei die Chiffrier-Dechiffrierstufe die eingegebenen Textzeichen bei Chiffrierung und Dechiffrierung mit derselben Chiffrierimpulssequenz mischt und das dabei entstehende Chiffrat bzw. der dabei rückgewonnene Klartext ausgegeben wird, und wobei die Chiffrier-Dechiffrierstufe ferner einen Chiffriergenerator (21) enthält, der die Chiffrierimpulssequenz von einem Anfangszustand ausgehend nach einem definierten Bildungsgesetz erzeugt, wobei zumindest der Anfangszustand des Chiffriergenerators (21) durch eine erste und eine zweite Schlüsselinformation einstellbar ist, die je aus mehreren Schlüsselzeichen bestehen und von denen die zweite im Zufallsgenerator (4) erzeugt und ausgebbar ist, dadurch gekennzeichnet, dass Schaltmittel vorgesehen sind, die im Chiffrierbetrieb aufgrund jeder Betätigung irgendeiner Taste von wenigstens einem Teil von solchen Eingabetasten, die bei jeder Benützung des Gerätes vor dem eigentlichen Chiffriervorgang während der Funktionsvorbereitung des Gerätes und/oder der Texteingabe benützt werden, ein vom Zufallsgenerator (4) erzeugtes Schlüsselzeichen in den Schlüsselzeichenspeicher (5) einschreiben, und dass die Funktionsablaufsteuerung (2) so ausgebildet ist, dass sie vor Beginn des Chiffriervorgangs die für die Festlegung des Anfangszustands des Chiffriergenerators notwendige Anzahl Schlüsselzeichen der zweiten Schlüsselinformation aus dem Schlüsselzeichenspeicher (5) ausliest und den Chiffriergenerator (21) damit lädt.

2. Gerät nach Anspruch 1, dadurch gekennzeichnet, dass der Pseudo-Zufallsgenerator durch einen mit einem Zähltakt relativ hoher Taktfrequenz getakteten Modulo-n-Zähler gebildet ist, wobei n gleich der Anzahl der als Schlüsselzeichen in Frage kommenden Zeichen ist.

3. Gerät nach Anspruch 2, dadurch gekennzeichnet, dass die Frequenz des Zähltakts zwischen 1 und 500 kHz, vorzugsweise über 10 kHz und insbesondere ungefähr 100 kHz beträgt.

4. Gerät nach Anspruch 2, dadurch gekennzeichnet, dass die Frequenz des Zähltakts so gewählt ist, dass der Zähler in der kürzestmöglichen Zeit, die zwischen zwei aufeinanderfolgenden Betätigungen der Tastatur vergeht, wenigstens einen vollständigen Zählzyklus durchläuft.

5. Gerät nach Anspruch 2, dadurch gekennzeichnet, dass die Frequenz des Zähltakts so gewählt ist, dass der Zähler in der Zeit, die im Normalfall zwischen zwei aufeinanderfolgenden Betätigungen der Tastatur vergeht, etwa 10 bis 100 Zählzyklen durchläuft.

6. Gerät nach einem der vorangehenden Ansprüche, dadurch gekennzeichnet, dass der Schlüsselspeicher ein FIFO-Speicher ist.

**Claims**

1. An encipher-decipher apparatus comprising an input keyboard (1), an encipher-decipher stage (2), a store for holding code characters (5), a random code generator (4), an output facility (3) and a processing an control stage (2), wherein the encipher-decipher stage mixes the supplied text characters in enciphering and deciphering with the same cipher pulse sequence, the resulting ciphered text or the recovered clear text being read out, and wherein the encipher-decipher stage contains also a ciphering generator (21) which produces, according to a defined law of formation, a cipher pulse sequence on the basis of an initial state, whereby at least the initial state of the ciphering generator (21) is adjustable by means of a first and second code item, each consisting of several code characters, the second code item being produced in the random code generator (4) and being read out therefrom, characterised in that there are provided circuit means which in the ciphering process, by virtue of the actuation of any keyboard key or at least of a key from a group of such inpu-keys, which are operated on use of the apparatus, before the actual encipher or decipher operation, during the initial functional preparation of the apparatus and or during the input of the text, cause to enter into the store for holding code characters (5) a code character produced by the random code generator (4), and that the processing and control stage (2) is so arranged that, before commencement of the ciphering process, it reads out from the code-character store (5) the number of code characters of the second code item required for determining the initial state of the ciphering generator, and supplies them to the ciphering generator (21).

2. An apparatus according to Claim 1, characterised in that the pseudo-random code generator is formed by a modulo-n counter clocked at a relatively high frequency, n being equal to the number of characters involved as code characters.

3. An apparatus according to Claim 2, characterised in that the clocking frequency is between 1 and 500 kHz, preferably above 10 kHz and in particular about 100 kHz.

4. An apparatus according to Claim 2, characterised in that the clocking frequency is selected to ensure that the counter passes through at least one complete counting cycle in the shortest possible period of time between two consecutive operations of the keyboard.

5. An apparatus according to Claim 2, characterised in that the clocking frequency is selected to ensure that the counter passes through about 10 to 100 counting cycles in the time which passes in the normal case between two consecutive keyboard operations.

6. An apparatus according to any one of the preceding claims, characterised in that the store for holding code characters is a FIFO store.

**Revendications**

1. Appareil de chiffrement-déchiffrement comportant un clavier d'entrée (1), un étage de chiffrement-déchiffrement (2), une mémoire de caractères de code (5), un générateur aléatoire (4), un dispositif de sortie (3) et une commande séquentielle fonctionnelle (2), et dans lequel l'étage de chiffrement-déchiffrement mélange les caractères du texte entrés lors du chiffrement et du déchiffrement avec la même séquence d'impulsions de chiffrement, avec sortie du texte chiffré obtenu ou du texte clair rétabli ; l'étage de chiffrement-déchiffrement comprend en outre un générateur de chiffrement (21) qui, à partir de l'état initial, délivre la séquence d'impulsions de chiffrement selon une loi de production définie ; l'état initial au moins du générateur de chiffrement (21) est ajustable par une première et une seconde information de code, constituées chacune par plusieurs caractères de code, et dont la seconde est produite et délivrée par le générateur aléatoire (4), ledit appareil étant caractérisé en ce que des moyens sont prévus qui, en mode chiffrement et par suite de chaque manœuvre d'une touche quelconque d'une partie au moins des touches d'entrée utilisées à chaque emploi de l'appareil, avant l'opération de chiffrement et pendant la préparation fonctionnelle de l'appareil et/ou l'entrée de texte, écrivent un caractère de code délivré par le générateur aléatoire (4) dans la mémoire de caractères de code (5) ; et la commande séquentielle fonctionnelle (2) est réalisée de façon à lire dans la mémoire de caractères de code (5) le nombre de caractères de code nécessaire pour déterminer l'état initial du générateur de chiffrement (21), puis à en charger ce dernier avant le début de l'opération de chiffrement.

2. Appareil selon revendication 1, caractérisé en ce que le générateur pseudo-aléatoire est constitué par un compteur modulo n rythmé par une fréquence de comptage relativement élevée, n étant égal au nombre des caractères utilisés comme caractères de code.

3. Appareil selon revendication 2, caractérisé en ce que la fréquence de comptage est comprise entre 1 et 500 kHz, de préférence supérieure à 10 kHz et en particulier d'environ 100 kHz.

4. Appareil selon revendication 2, caractérisé en ce que la fréquence de comptage est choisie de façon que le compteur effectue au moins un cycle de comptage complet dans l'intervalle de temps minimal possible entre deux manœuvres successives d'une touche.

5. Appareil selon revendication 2, caractérisé en ce que la fréquence de comptage est choisie de façon que le compteur effectue environ 10 à 100 cycles de comptage pendant le temps s'écoulant normalement entre deux manœuvres successives d'une touche.

6. Appareil selon une quelconque des revendications 1 à 5, caractérisé par l'emploi d'une mémoire FIFO comme mémoire de code.